# FASCICULE DE BREVET EUROPEEN

(11) **EP 2 779 852 B1**
(45) Date de publication et mention de la délivrance du brevet: **20.01.2016**
(21) Numéro de dépôt: 12806524.0
(22) Date de dépôt: 09.11.2012
(51) Int. Cl.: A42B 3/06, G01P 15/03, G01P 15/04

(54) **CASQUE DE SÉCURITÉ ÉQUIPÉ D'UN TÉMOIN D'IMPACT**
SCHUTZHELM MIT EINEM EINSCHLAGSINDIKATOR
SAFETY HELMET PROVIDED WITH AN IMPACT INDICATOR

(30) Priorité: 16.11.2011 FR 1103486
(43) Date de publication de la demande: 24.09.2014
(73) Titulaire: Zedel, 38920 Crolles (FR)
(72) Inventeur: LANEZ, Raphaël, F-38920 Crolles (FR)
(74) Mandataire: Hecké, Gérard
(86) Numéro de dépôt international: PCT/FR2012/000452
(87) Numéro de publication internationale: WO 2013/072574

(56) Documents cités:
- WO-A1-2006/022680
- WO-A1-2011/139224
- FR-A1- 2 800 580
- US-A- 4 044 399
- US-A- 5 950 244
- US-A1- 2011 144 539

## Description

### Domaine technique de l'invention

L'invention est relative à un casque de sécurité comprenant :
- une première coque apte à absorber des chocs causés par des impacts sur une surface extérieure dudit casque,
- une surface intérieure délimitée au moins en partie par la première coque et destinée à être orientée vers la tête du porteur du casque,
- un témoin d'impact.

### État de la technique

Un casque de sécurité comprend classiquement une coque extérieure en forme de calotte associée à une coque de rembourrage logée à l'intérieur de la coque extérieure. La coque de rembourrage est destinée à absorber les chocs causés par des impacts sur la coque extérieure.

Lorsqu'un casque reçoit un choc, il est important de savoir s'il peut encore protéger son porteur, ou s'il doit être remplacé. Pour des chocs très violents, le casque joue un rôle en absorbant le maximum d'énergie en se déformant, parfois jusqu'à la rupture.

Après un choc sans rupture du casque, il est possible de connaître son état en le retournant au fabricant pour un contrôle aux rayons X. Cependant, un tel contrôle est coûteux à mettre en oeuvre, et demande une logistique conséquente. En effet, lors d'un choc la coque extérieure du casque peut se déformer puis revenir à sa forme initiale et la coque de rembourrage peut se comprimer sans retour à sa forme initiale, dès lors il est quasi impossible de savoir par inspection visuelle du casque si ce dernier est utilisable ou non.

Il résulte donc une problématique relative à la mise en oeuvre du contrôle d'un casque ayant subi un choc.

La demande de brevet FR2800580 résout en partie ce besoin. Dans cette demande de brevet, la coque extérieure, en forme de calotte, est équipée d'un détecteur visuel qui permet de déterminer par simple lecture si le casque a subi un choc important. Le détecteur visuel fonctionne sur la base d'un liquide dont la tension de surface est telle qu'il est apte à se diffuser dans un volume d'un tube par capillarité lorsqu'un choc trop important est appliqué sur le casque.

Cette solution a ses limites car la force du choc n'est vérifiée qu'au niveau de la coque extérieure. De plus, un choc direct sur le détecteur, par l'intérieur du casque, peut rompre la tension de surface et entraîner la diffusion du liquide alors que le casque en lui-même est encore utilisable.

Le brevet US6,065,158 décrit un casque muni d'une coque extérieure et d'un rembourrage intérieur. Le rembourrage intérieur se présente sous la forme d'une mousse en polystyrène, et inclut un témoin d'impact sous forme d'indicateur visuel intégré à une couche du rembourrage intérieur. Cet indicateur visuel se présente sous la forme d'un gaz coloré non toxique. Lors d'un impact, les cellules de la mousse explosent de sorte à répandre l'indicateur visuel qui indique alors la zone où a eu lieu l'impact. L'indicateur est ensuite destiné à être exploité par du personnel médical afin d'évaluer les conséquences du choc sur le porteur du casque. Le témoin d'impact selon ce brevet présente le risque de se déclencher de manière irréversible notamment si une pression est appliquée sur le rembourrage par l'intérieur du casque. De plus, par l'intégration du gaz, il est difficile de calibrer la force nécessaire au déclenchement de l'indicateur visuel.

Il existe aussi des indicateurs électroniques à base d'accéléromètre, mais ces derniers nécessitent l'utilisation d'une source de courant et d'un circuit de détection.

### Objet de l'invention

L'objet de l'invention consiste à réaliser un casque ne présentant pas les inconvénients de l'art antérieur.

On tend vers cet objet notamment en ce que le témoin d'impact est un élément solide configuré de sorte qu'une extrémité du témoin d'impact comporte :
- une première position relative par rapport à la surface intérieure,
- une seconde position relative par rapport à la surface intérieure après un choc causé par un impact d'une force supérieure à un seuil prédéterminé sur la surface extérieure.

Selon un premier mode de réalisation, la surface extérieure fait partie intégrante de la première coque,
- la première coque est formée dans un matériau à déformation élastique,
- le témoin d'impact, fixé à la première coque, est formé dans un matériau à déformation plastique de sorte qu'après l'impact de force supérieure au seuil prédéterminé la première coque reprenne sa forme initiale en entraînant un mouvement du témoin compressé au cours de l'absorption du choc.

Selon un second mode de réalisation, le casque comporte une seconde coque en forme de calotte, la première coque étant logée à l'intérieur de la seconde coque, la surface extérieure étant délimitée par la seconde coque.

Avantageusement, la première coque est réalisée dans un matériau à déformation plastique, et le témoin d'impact, solidaire de la première coque, est réalisé dans un matériau à déformation élastique.

Selon une variante, notamment du second mode, le témoin d'impact est logé dans la première coque dans la première position, et dans la seconde position le témoin d'impact comporte au moins une portion faisant saillie de la première coque au niveau de la surface intérieure.

Le témoin d'impact peut comporter une base à partir de laquelle s'élève une tige, l'extrémité libre de la tige opposée à la base étant orientée dans une direction opposée à la surface extérieure, et la base étant fixée à la première coque. La base peut comporter un épaulement délimitant à son interface avec la tige une rainure annulaire, formant ainsi un point de fixation du témoin d'impact avec la première coque au niveau de sa base.

Avantageusement, la tige est apte à coulisser dans la première coque lorsque ladite première coque diminue d'épaisseur consécutivement à l'absorption d'un choc au niveau dudit témoin d'impact.

Selon une mise en oeuvre, notamment associée au second mode de réalisation, la première coque comporte un trou dans lequel le témoin d'impact est monté, ledit témoin d'impact étant fixé à la première coque au niveau d'une extrémité du trou proximale de la seconde coque, et ledit témoin d'impact comportant une portion apte à coulisser, lors du passage de la première position à la seconde position, dans le trou de sorte à faire saillie, en seconde position, d'une ouverture du trou située au niveau de la surface intérieure.

Selon une mise en oeuvre, notamment associée au premier mode de réalisation, la première coque comporte un trou dans lequel le témoin d'impact est monté, ledit témoin d'impact étant fixé à la première coque au niveau d'une extrémité du trou proximale de la surface extérieure, et ledit témoin d'impact comportant une portion apte à coulisser par compression dans le trou en direction de la surface extérieure lors du passage de la première position à la seconde position.

Selon un autre mode de réalisation en variante du seconde mode, le témoin d'impact est formé dans un matériau à déformation plastique et est fixé à la seconde coque.

Selon une variante de l'autre mode, le témoin d'impact est une partie de la première coque, ladite première coque étant fixé à la seconde coque au niveau dudit témoin d'impact, en première position le témoin d'impact est monobloc avec la première coque et en seconde position le témoin d'impact est désolidarisé du reste de la première coque.

Avantageusement, le casque comporte une pluralité de témoins d'impact agencés pour couvrir plusieurs zones potentielles d'impact sur la surface extérieure.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente une vue en coupe selon un plan de coupe sensiblement vertical passant par l'avant et l'arrière d'un casque avant impact.
- La figure 2 illustre la même coupe que la figure 1 après un impact d'une force prédéterminée ayant rendu le casque inutilisable.
- La figure 3 illustre, en trois dimensions, la couche de rembourrage avant impact.
- La figure 4 est une vue en coupe de la figure 3 selon un plan de coupe sensiblement vertical passant par l'avant et l'arrière de la couche de rembourrage.
- La figure 5 illustre, en trois dimensions, la couche de rembourrage après un impact d'une force prédéterminée ayant rendu le casque inutilisable.
- La figure 6 est une vue en coupe de la figure 5 selon un plan de coupe sensiblement vertical passant par l'avant et l'arrière de la couche de rembourrage.
- La figure 7 est une vue en trois dimensions d'un témoin d'impact utilisé dans les modes de réalisation des figures 1 à 6.
- La figure 8 illustre une vue en coupe selon un plan de coupe sensiblement vertical passant par l'avant et l'arrière d'un casque monocoque avant impact.
- La figure 9 illustre la même vue que la figure 8 mais après impact.
- Les figures 10 et 11 illustrent une variante de réalisation du casque dans lequel le témoin d'impact est fixé sur la coque extérieure.
- Les figures 12 et 13 illustrent une autre réalisation d'un casque.

### Description d'un mode préférentiel de l'invention

Le casque de sécurité décrit ci-après diffère de l'art antérieur notamment en ce que le témoin d'impact est un élément solide dont la position, par rapport à la coque de protection extérieure ou la surface intérieure du casque, indique si le casque a reçu un impact entraînant une détérioration de la structure de la coque destinée à absorber les chocs. Le témoin d'impact agit donc comme un repère avantageusement visuel représentatif de l'état du casque.

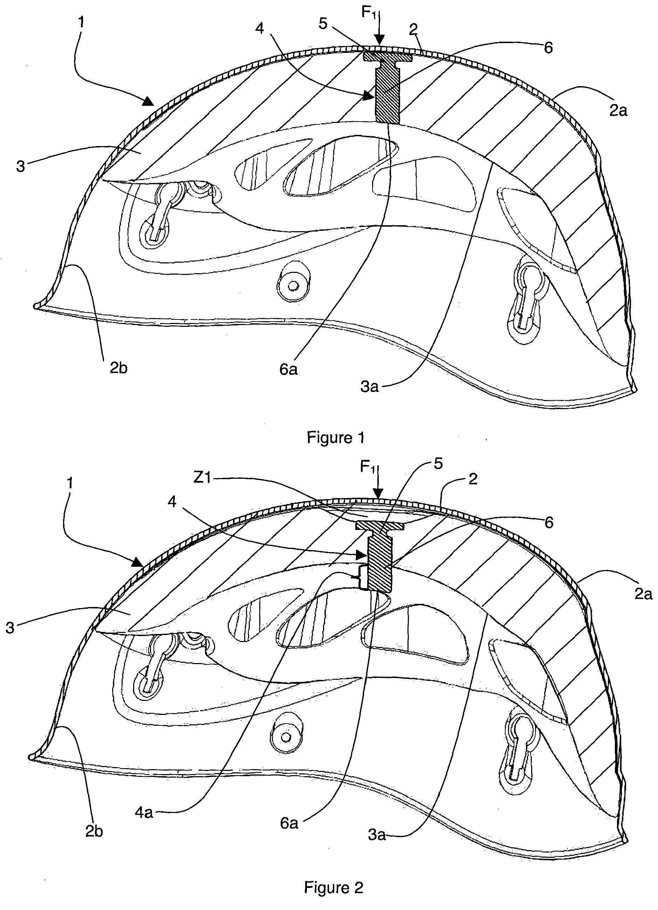

Sur les figures 1 et 2, un casque de sécurité 1 comprend une première coque 3, aussi appelée par la suite coque de rembourrage 3, et une seconde coque 2, appelée par la suite coque de protection extérieure 2 généralement en forme de calotte. Cette coque de protection 2 peut être réalisée en polycarbonate injecté, ou tout autre matière plastique notamment thermoformée ou en polystyrène expansé. Le rôle de cette coque de protection 2 est de protéger la tête d'un porteur du casque en recevant elle-même des chocs générés par des impacts d'objets sur la surface extérieure 2a du casque délimitée par la coque de protection 2.

La coque de rembourrage 3, aussi appelée calotin dans le domaine, est logée à l'intérieur de la coque de protection 2. Cette coque de rembourrage 3 est destinée à absorber des chocs causés par les impacts sur la surface extérieure 2a du casque, c'est-à-dire la coque de protection 2 dans l'exemple. Ainsi, lorsqu'un impact vient frapper la coque de protection 2 de la figure 1 par exemple selon F₁, cette dernière se déforme, généralement de manière élastique, en direction de la coque de rembourrage 3, la coque de rembourrage 3 absorbe au moins partiellement l'impact pour protéger au mieux la tête du porteur. La coque de rembourrage 3 est, de préférence, fixée dans le fond de la calotte, par exemple par collage ou tout autre moyen de fixation idoine. Comme sur les figures 1 et 2, la coque de rembourrage 3 est avantageusement fixée sur une surface 2b de la coque de protection 2, avantageusement de forme concave, de manière opposée à la surface extérieure 2a. La coque de rembourrage 3 délimite au moins en partie la surface intérieure 3a du casque destinée à être orientée vers la tête du porteur du casque. Cette coque de rembourrage 3 peut être équipée d'éléments de confort (non représentés) destinés à venir en contact avec la tête de la personne portant le casque. Typiquement les éléments de confort peuvent se présenter sous la forme de mousse souple.

Afin de savoir si le casque 1 est utilisable ou non, un témoin d'impact 4 est, de préférence, disposé au niveau de la coque de rembourrage 3. Le témoin d'impact 4 est un élément solide préférentiellement solidaire de la coque de rembourrage 3 par fixation à cette dernière. Le témoin d'impact 4 et la coque de rembourrage 3 sont configurés de sorte que le témoin comporte une première position relative par rapport à la coque de protection 2, ou à la surface intérieure 3a du casque, comme illustré à la figure 1. Dans cette première position, l'intégrité du casque est satisfaisante, et il peut être utilisé sans risques dans le but de protéger la tête de son porteur. En outre, le témoin d'impact 4 et la coque de rembourrage 3 sont configurés de sorte que le témoin d'impact 4 puisse occuper une seconde position relative par rapport à la coque de protection 2, ou à la surface intérieure 3a du casque, après un choc causé par un impact d'une force supérieure à un seuil prédéterminé sur la coque de protection 2 c'est-à-dire au niveau de la surface extérieure 2a. Cette seconde position du témoin d'impact 4 est illustrée à la figure 2. Les première et seconde positions peuvent être déterminées en fonction de la position d'une extrémité du témoin d'impact. En effet, par position on parle soit de la position globale du témoin d'impact soit de la position de l'une de ses extrémités (avantageusement une extrémité longitudinale).

Généralement les casques sont conçus pour résister à un choc associé à une force d'impact inférieure à 10kN. Ainsi, la notion de seuil prédéterminé est associée à la valeur maximale que peut encaisser un casque avant d'être considéré comme inutilisable. L'homme du métier pourra bien entendu adapter la valeur du seuil en choisissant les matériaux idoines.

Avantageusement, le témoin d'impact 4 est visuel. Autrement dit, une simple inspection visuelle du casque suffit pour déterminer la position du témoin d'impact 4. De préférence, le témoin d'impact 4 est visible au niveau de la surface intérieure 3a de la coque de rembourrage 3 destinée à être orientée vers la tête du porteur du casque.

Le passage de la première position à la seconde position peut être réalisé de la manière suivante : tout d'abord, l'impact selon la flèche F1 de la figure 1 est absorbé par un tassement localisé de la couche de rembourrage 3 au niveau du témoin d'impact 4 (zone Z₁ de la figure 2). Le témoin d'impact ayant changé de position, il est aisé pour le porteur du casque de vérifier si l'intégrité du casque a été compromise. Sur la figure 2, après l'impact, la coque de protection 2 revient, en général, à sa position initiale, et la coque de rembourrage 3 a été compressée lors de l'absorption du choc au niveau de la zone Z₁ tout en transmettant un mouvement au témoin d'impact 4 de sorte à entraîner une modification de sa position. Sur la figure 2, le témoin d'impact fait saillie de la surface intérieure 3a alors qu'à la figure 1 il était avantageusement en affleurement de la surface intérieure 3a. Dans la configuration de la figure 2, la coque de rembourrage 3 a perdu ses caractéristiques structurelles d'absorption, et un nouveau choc selon F₁ risquerait d'avoir des conséquences directes sur la santé du porteur du casque.

Ainsi, avantageusement, la solution évoquée ci-dessus peut être mise en oeuvre par le fait que la coque de rembourrage 3 est réalisée dans un matériau à déformation plastique, et que le témoin d'impact 4, solidaire de la première coque de rembourrage 3, est réalisé dans un matériau à déformation élastique. Ainsi, lors d'un impact, la coque de rembourrage 3 va se tasser (figure 2) au niveau de l'impact Z₁ entraînant le déplacement du témoin d'impact 4 qui, s'il a été tassé lors de l'impact, va reprendre ses dimensions initiales de sorte à occuper la seconde position. Dans l'exemple des figures 1 et 2, le témoin a subi une translation entre sa première et sa seconde position. Il est aussi possible que la coque de rembourrage 3 soit d'un matériau élastique et que le témoin soit d'un matériau à déformation plastique de sorte qu'après un choc il soit possible de « lire » l'état du casque par inspection visuelle.

Autrement dit, de manière générale, la position du témoin d'impact, ou de son extrémité, est représentative de l'intégrité ou de l'altération de la couche de rembourrage 3. Par « intégrité » on entend la capacité de la couche de rembourrage 3 à absorber de nouveaux chocs.

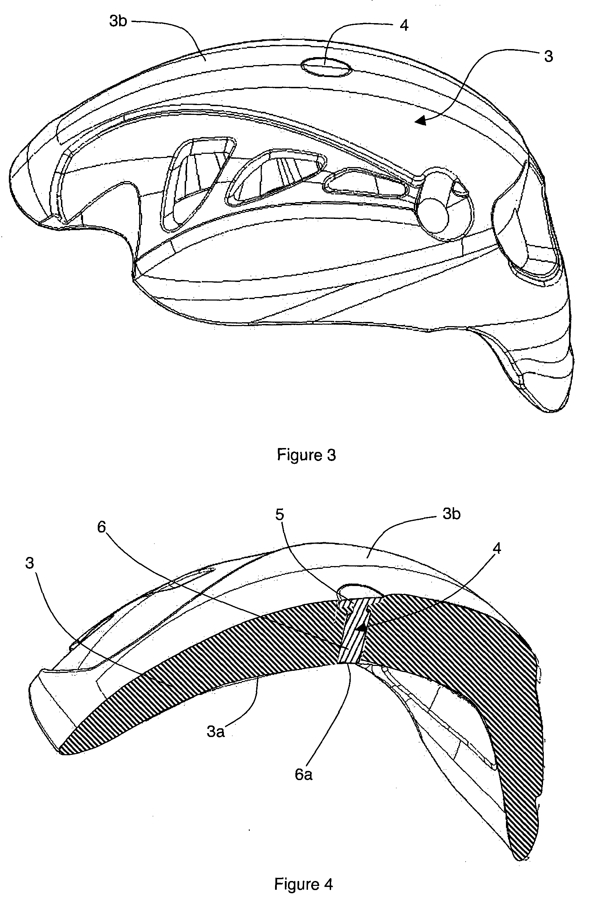

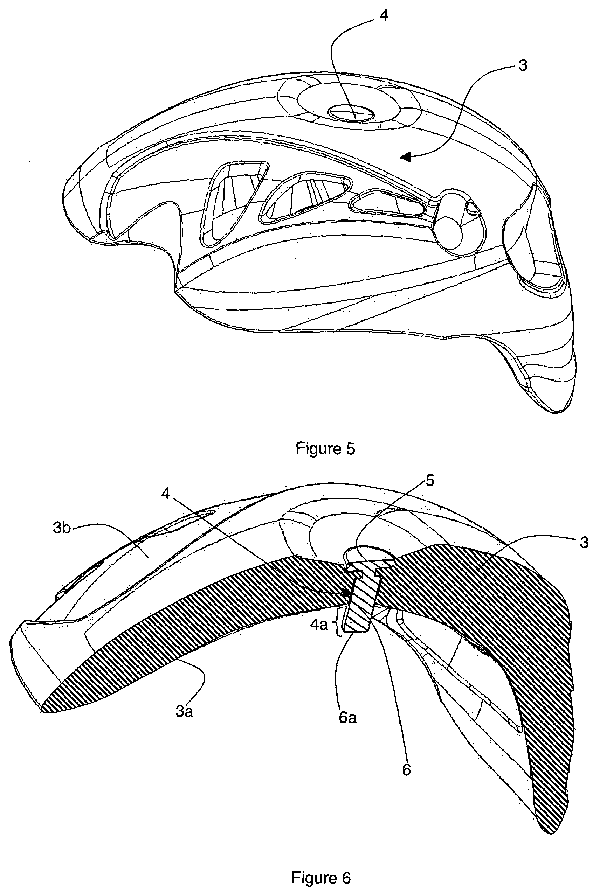

Afin de faciliter la lecture visuelle de l'intégrité du casque, le témoin d'impact 4 peut être logé dans la coque de rembourrage 3 dans la première position telle qu'illustré aux figures 1, 3 et 4. Dans la seconde position, illustrée aux figures 2, 5 et 6 le témoin d'impact 4 comporte au moins une portion 4a faisant saillie de la coque de rembourrage 3 au niveau de la surface intérieure 3a de ladite coque de rembourrage 3 destinée à être orientée vers la tête du porteur dudit casque. Sur l'exemple de la figure 6, la surface intérieure 3a est opposée à une surface 3b destinée à être orientée vers le fond 2b de la calotte et à y être fixée. Autrement dit dans l'exemple, si le témoin d'impact 4 est dans la coque de rembourrage ou affleure (figures 1 et 4) au niveau de la surface intérieure 3a, le casque est considéré comme utilisable car le témoin via son extrémité 6a est en première position, et si le témoin d'impact 4 fait saillie de la surface intérieure 3a, le casque 1 est considéré comme inutilisable (figures 2 et 6).

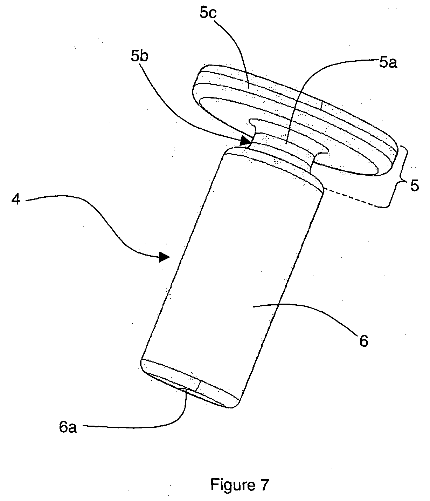

Selon un mode de réalisation particulier illustré à la figure 7 et applicable aux modes de réalisation décrits ci-avant et ci-après, le témoin d'impact 4 comporte une base 5 à partir de laquelle s'élève une tige 6. En place dans le casque, comme sur les figures 1, 2, 4 et 6, l'extrémité libre 6a de la tige 6 opposée à la base 5 est orientée dans une direction opposée à la coque de protection 2 (ou de manière plus générale de la surface extérieure 2a dans le cas où la coque de protection extérieure ne serait pas présente), la base 5 étant fixée à la coque de rembourrage 3. Selon une mise en oeuvre particulière, la base 5 comporte un épaulement 5a délimitant à son interface avec la tige 6 une rainure annulaire 5b, formant ainsi un point de fixation du témoin d'impact 4 avec la coque de rembourrage 3 au niveau de sa base 5. Autrement dit, la base 5 peut comporter un piètement 5c sur lequel une saillie forme l'épaulement 5a, la rainure 5b étant délimitée à la fois par le piètement 5c, l'épaulement, 5b et la tige 6. La coque de rembourrage 3 et le témoin d'impact 4 peuvent être fabriqués séparément, et assemblés par montage à force du témoin d'impact 4 dans la coque de rembourrage 3.

De préférence, la tige 6 est apte à coulisser dans la coque de rembourrage 3 lorsque ladite coque de rembourrage 3 diminue d'épaisseur consécutivement à l'absorption d'un choc au niveau dudit témoin d'impact 4, c'est notamment ce coulissement qui permet, selon le mode de réalisation des figures 2 et 6, de former la saillie au niveau de la portion 4a.

De manière générale, le témoin d'impact 4 visuel peut être mise en oeuvre en ce que la coque de rembourrage 3 comporte un trou dans lequel le témoin d'impact 4 est monté, ledit témoin d'impact 4 étant fixé à la coque de rembourrage 3 au niveau d'une extrémité du trou proximale de la coque de protection 2, par exemple au niveau de la base 5 du témoin d'impact 4. Le témoin d'impact 4 comporte alors une portion, par exemple la tige 6, apte à coulisser, lors du passage de la première position à la seconde position, dans le trou de sorte à faire saillie, en seconde position, d'une ouverture du trou située au niveau de la surface intérieure 3a de la coque de rembourrage 3 destinée à être en regard de la tête du porteur.

Dans l'exemple particulier de la figure 4, l'extrémité libre 6a de la tige 6 affleure au niveau de la surface 3a de la coque de rembourrage 3 et une face de la base 5 formant l'extrémité libre du témoin d'impact 4 opposée longitudinalement à la face libre 6a de la tige 6 affleure au niveau de la surface 3b de la coque de rembourrage 3 destinée à venir en regard avec le fond de la calotte. Ceci procure une meilleure visibilité au porteur du casque, mais cela peut être fait de façon différente.

Selon une réalisation applicable aux différents modes de réalisations et variantes décrits ci-dessus, la coque de rembourrage 3 est en polystyrène, et le témoin d'impact 4 est en polypropylène. Ces deux matériaux permettent avantageusement une déformation plastique de la coque de rembourrage 3 lors d'un impact, et une déformation élastique du témoin d'impact 4.

Le témoin d'impact n'est pas limité à la forme décrite en combinaison avec la figure 7, ainsi l'homme du métier pourra adapter tout type de forme de sorte que son extrémité soit apte à occuper les première et seconde positions, pour former avantageusement un témoin d'impact visuel.

Il a été décrit ci-avant un casque de protection à base de deux coques. Selon une variante, il peut être utilisé un casque monocoque ne comportant que la première coque. Dans ce cas, la surface extérieure fait partie intégrante de la première coque qui forme alors à la fois la coque de protection et la coque de rembourrage. Un tel casque monocoque présente l'avantage d'être plus léger. Avantageusement, la première coque est alors formée dans un matériau à déformation élastique, par exemple une mousse ou du polypropylène expansé. La déformation élastique permet au casque d'encaisser plusieurs impacts au cours d'une même sortie pour garantir la protection du porteur. En effet, après chaque impact, la première coque reprend sa forme et sa position d'origine pour absorber un éventuel nouveau choc.

Cependant, après un ou plusieurs chocs, l'intégrité de la première coque peut être modifiée même si de première apparence elle semble intacte. Dès lors, il résulte le besoin d'adapter le témoin d'impact à cette réalisation. Typiquement, le témoin d'impact pourra être du même type que celui décrit à la figure 7 en combinaison avec le casque à deux coques à la différence que ledit témoin d'impact est réalisé dans un matériau à déformation plastique. La combinaison particulière d'une coque à déformation élastique avec un témoin à déformation plastique permet qu'après l'impact de force supérieure au seuil prédéterminé la première coque reprenne sa forme initiale en entraînant un mouvement du témoin compressé au cours de l'absorption du choc. Dans cette réalisation, le témoin d'impact est fixé à la première coque La déformation du témoin d'impact peut être réalisée par la mise en appui de ce dernier contre la tête du porteur.

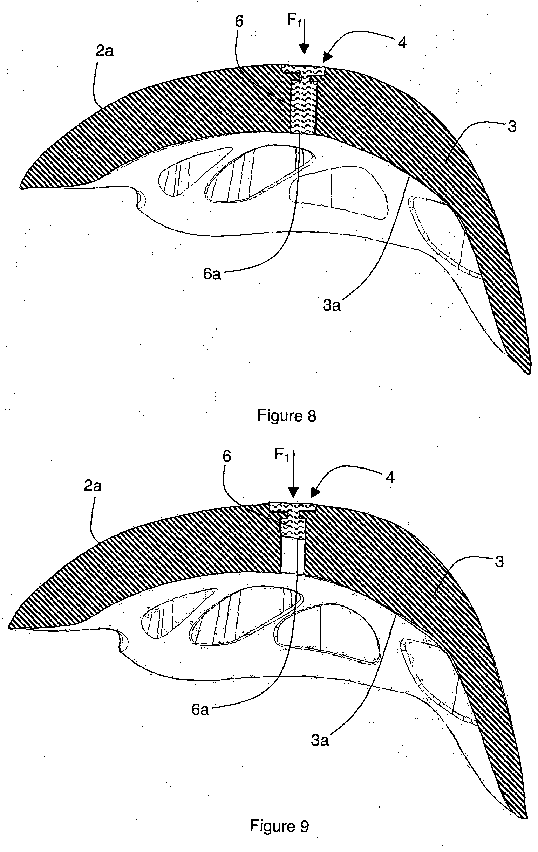

Ainsi, dans le mode de réalisation à base de monocoque illustré aux figures 8 et 9, la première coque 3 est à déformation élastique et le témoin d'impact 4 est à déformation plastique. La compression du témoin d'impact 4 non réversible permettra, par exemple, dans la première position la mise en affleurement de l'extrémité 6a du témoin 4 avec la surface intérieure 3a et dans la seconde position la rétractation du témoin d'impact 4 à l'intérieur de la première coque 3. Autrement dit, la première coque 3 peut comporter un trou dans lequel le témoin d'impact 4 est monté, ledit témoin d'impact 4 étant fixé à la première coque 3 au niveau d'une extrémité du trou proximale de la surface extérieure 2a destinée à absorber les chocs, et ledit témoin d'impact 4 comporte une portion apte à coulisser par compression dans le trou en direction de la surface extérieure 2a lors du passage de la première position à la seconde position. Dès lors, comme illustré l'extrémité 6a de la tige 6 indique l'état du casque. En fait, le passage de la première position illustrée à la figure 8 à la seconde position illustrée à la figure 9 est réalisé par compression selon F₁ de la première coque 3 et du témoin d'impact, l'élasticité de la première coque 3 permet son retour en position initiale alors que le témoin d'impact 4 reste lui comprimé.

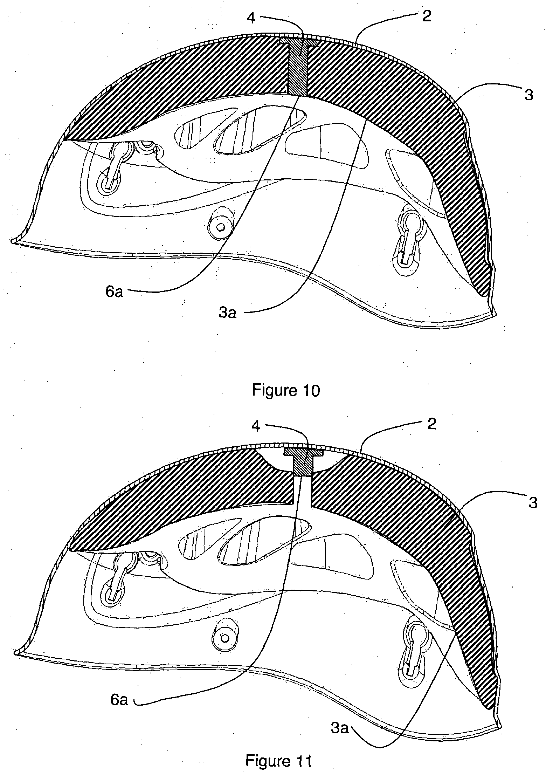

Les figures 10 et 11 illustrent une variante du mode de réalisation du casque à deux coques distinctes (coques de rembourrage 3 et coque de protection 2). Dans cette variante, la différence est que le témoin d'impact 4 est formé dans un matériau à déformation plastique, et est fixé à la seconde coque 2. Cette fixation peut être réalisée par collage direct sur la seconde coque 2. En fonction de la position de l'extrémité 6a du témoin d'impact 4 il est possible de déterminer l'état du casque. Contrairement à la réalisation de la figure 2, le témoin d'impact ne vient pas faire saillie au niveau de la surface intérieure 3a destinée à être orientée vers la tête du porteur du casque mais se rétracte en direction de la seconde coque 2 (figure 11).

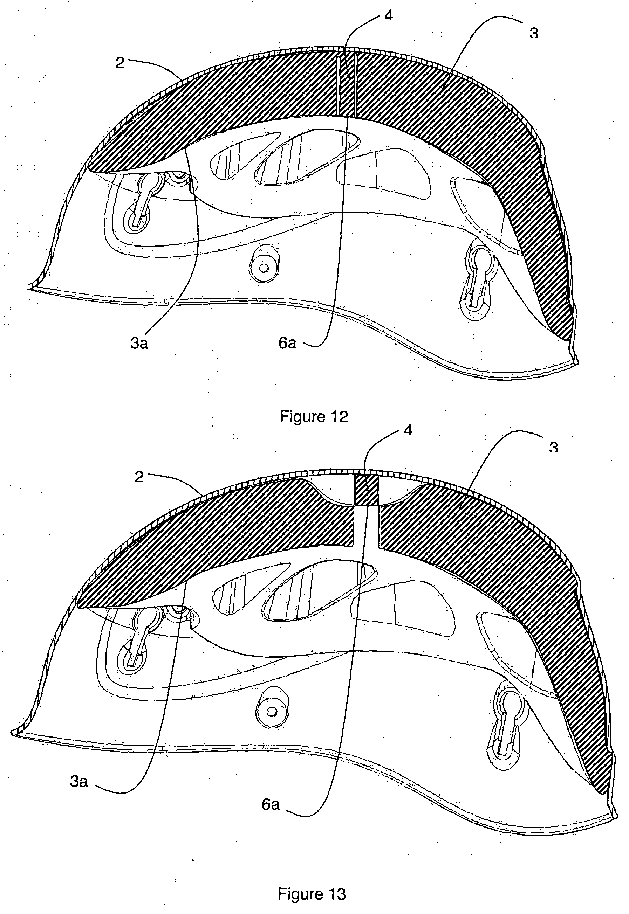

Les figures 12 et 13 illustrent une variante de la réalisation des figures 10 et 11. Dans cette variante, le témoin d'impact 4 est une partie de la première coque 3, ladite première coque 3 étant fixé à la seconde coque 2 au niveau dudit témoin d'impact 4, en première position le témoin d'impact 4 est monobloc avec la première coque 3 et en seconde position le témoin d'impact est désolidarisé du reste de la première coque 3 tout en étant fixé à la seconde coque. Ceci peut être réalisé par structuration du témoin d'impact 4 dans la première coque 3 de sorte à créer des amorces de rupture destinées à rompre lors de l'impact. Avantageusement, le témoin d'impact 4 est fixé par collage à la seconde coque 2. Dans ce cas, toute la première coque 3 est à déformation plastique. Le même principe de compression que la variante des figures 10 et 11 s'applique ici.

Dans les réalisations des figures 10 à 13, la position de l'extrémité 6a du témoin d'impact 4 par rapport à la surface interne 3a (ou la coque 2) permet de déterminer si le casque est utilisable ou non.

Ainsi, de manière commune aux réalisations du casque à deux coques et du casque monocoque, le casque de sécurité comprend de manière générale au moins :
- une première coque 3 apte à absorber des chocs causés par des impacts sur une surface extérieure 2a dudit casque,
- une surface intérieure 3a délimitée au moins en partie par la première coque 3 et destinée à être orientée vers la tête du porteur du casque,
- un témoin d'impact 4,
   et le témoin d'impact 4 est un élément solide configuré de sorte qu'une extrémité 6a du témoin d'impact 4 comporte :
- une première position relative par rapport à la surface intérieure 3a,
- une seconde position relative par rapport à la surface intérieure 3a après un choc causé par un impact d'une force supérieure à un seuil prédéterminé sur la surface extérieure 2a.

Dans les exemples décrits ci-avant, un seul témoin d'impact équipe le casque de protection. Ce témoin d'impact est configuré pour réagir en fonction d'un impact réalisé sur le dessus du casque selon la flèche F₁ des figures 1 et 2. Bien entendu, l'invention ne se limite pas à l'utilisation d'un unique témoin d'impact. Ainsi, à la lecture de la présente description, l'homme du métier pourra réaliser un casque comportant une pluralité de témoins d'impact, avantageusement au niveau de la première coque, lesdits témoins d'impact étant alors agencés pour couvrir plusieurs zones potentielles d'impact sur la surface extérieure du casque (première coque ou seconde coque le cas échéant).

Bien que cela ne soit pas représenté, le casque de protection comporte avantageusement un tour de tête, un serre-nuque et une sangle jugulaire. Ces éléments sont de type bien connus, et permettent notamment d'adapter le casque à différentes morphologies de tête.

Selon une variante non représentée, lorsque le témoin d'impact est destiné à faire saillie consécutivement à un impact, la portion destinée à faire saillie peut comporter une graduation (soit binaire en passant par exemple d'une couleur à l'autre ou en utilisant un simple trait, soit à base de plusieurs échelons) permettant de déterminer par simple lecture si la première coque peut encaisser un nouveau choc ou non.

Un tel casque de protection est notamment adapté à la pratique de l'escalade, de l'alpinisme, et pour les travaux au sol ou en hauteur.

Dans les cas visés ci-dessus, la tête du porteur du casque participera à la compression du témoin d'impact qu'il soit élastique ou plastique. La densité de matière du témoin d'impact sera, de préférence, telle que lorsque le témoin d'impact sera comprimé contre la tête du porteur la compression se fera sans risque de santé majeur pour le porteur.

Comme évoqué précédemment, dans le présent texte un matériau élastique peut être de type polypropylène et un matériau plastique peut être de type polystyrène.

La première position est généralement représentative d'un casque neuf ou d'un casque n'ayant subit qu'un choc mineur n'engageant pas son intégrité.

## Revendications

1. Casque de sécurité comprenant :
- une première coque (3) apte à absorber des chocs causés par des impacts sur une surface extérieure (2a) dudit casque,
- une surface intérieure (3a) délimitée au moins en partie par la première coque (3) et destinée à être orientée vers la tête du porteur du casque,
- un témoin d'impact (4),
**caractérisé en ce que** le témoin d'impact (4) est un élément solide configuré de sorte qu'une extrémité (6a) du témoin d'impact (4) comporte :
- une première position relative par rapport à la surface intérieure (3a),
- une seconde position relative par rapport à la surface intérieure (3a) après un choc causé par un impact d'une force supérieure à un seuil prédéterminé sur la surface extérieure (2a).

2. Casque selon la revendication 1, **caractérisé en ce que** :
- la surface extérieure (2a) fait partie intégrante de la première coque (3),
- la première coque (3) est formée dans un matériau à déformation élastique,
- le témoin d'impact (4), fixé à la première coque (3), est formé dans un matériau à déformation plastique de sorte qu'après l'impact de force supérieure au seuil prédéterminé la première coque (3) reprenne sa forme initiale en entraînant un mouvement du témoin (4) compressé au cours de l'absorption du choc.

3. Casque selon la revendication 1, **caractérisé en ce qu'**il comporte une seconde coque (2) en forme de calotte, la première coque (3) étant logée à l'intérieur de la seconde coque (2), la surface extérieure (2a) étant délimitée par la seconde coque (2).

4. Casque selon la revendication 3, **caractérisé en ce que** la première coque (3) est réalisée dans un matériau à déformation plastique, et **en ce que** le témoin d'impact (4), solidaire de la première coque (3), est réalisé dans un matériau à déformation élastique.

5. Casque selon l'une des revendications 3 ou 4, **caractérisé en ce que** le témoin d'impact (4) est logé dans la première coque (3) dans la première position, et **en ce que** dans la seconde position le témoin d'impact (4) comporte au moins une portion (4a) faisant saillie de la première coque (3) au niveau de la surface intérieure (3a).

6. Casque selon l'une quelconque des revendications précédentes, **caractérisé en ce que** le témoin d'impact (4) comporte une base (5) à partir de laquelle s'élève une tige (6), l'extrémité libre (6a) de la tige (6) opposée à la base (5) étant orientée dans une direction opposée à la surface extérieure (2a), et la base (5) étant fixée à la première coque (3).

7. Casque selon la revendication 6, **caractérisé en ce que** la base (5) comporte un épaulement (5a) délimitant à son interface avec la tige (6) une rainure annulaire (5b), formant ainsi un point de fixation du témoin d'impact (4) avec la première coque (3) au niveau de sa base (5).

8. Casque selon la revendication 4 et l'une des revendications 5 à 7, **caractérisé en ce que** la tige (6) est apte à coulisser dans la première coque (3) lorsque ladite première coque (3) diminue d'épaisseur consécutivement à l'absorption d'un choc au niveau dudit témoin d'impact (4).

9. Casque selon l'une des revendications 3 à 5, **caractérisé en ce que** la première coque (3) comporte un trou dans lequel le témoin d'impact (4) est monté, ledit témoin d'impact (4) étant fixé à la première coque (3) au niveau d'une extrémité du trou proximale de la seconde coque (2), et ledit témoin d'impact (4) comportant une portion apte à coulisser, lors du passage de la première position à la seconde position, dans le trou de sorte à faire saillie (4a), en seconde position, d'une ouverture du trou située au niveau de la surface intérieure (3a).

10. Casque selon la revendication 2, **caractérisé en ce que** la première coque (3) comporte un trou dans lequel le témoin d'impact (4) est monté, ledit témoin d'impact (4) étant fixé à la première coque (3) au niveau d'une extrémité du trou proximale de la surface extérieure (2a), et ledit témoin d'impact (4) comportant une portion apte à coulisser par compression dans le trou en direction de la surface extérieure (2a) lors du passage de la première position à la seconde position.

11. Casque selon la revendication 3, **caractérisé en ce que** le témoin d'impact est formé dans un matériau à déformation plastique et est fixé à la seconde coque (2).

12. Casque selon la revendication 11, **caractérisé en ce que** le témoin d'impact (4) est une partie de la première coque (3), ladite première coque (3) étant fixé à la seconde coque (2) au niveau dudit témoin d'impact (4), en première position le témoin d'impact (4) est monobloc avec la première coque (3) et en seconde position le témoin d'impact (4) est désolidarisé du reste de la première coque (3).

13. Casque selon l'une quelconque des revendications précédentes, **caractérisé en ce qu'**il comporte une pluralité de témoins d'impact agencés pour couvrir plusieurs zones potentielles d'impact sur la surface extérieure (2a).

## Patentansprüche

1. Schutzhelm, der umfasst:
- eine erste Schale (3), die geeignet ist, Stöße aufzunehmen, die durch Aufpralle auf einer Außenfläche (2a) des Helms ausgelöst werden,
- eine Innenfläche (3a), die zumindest teilweise begrenzt wird durch die erste Schale (3) und zum Kopf des Helmträgers weisen soll,
- ein Aufprall-Kontrollelement (4),
**dadurch gekennzeichnet, dass** das Aufprall-Kontrollelement (4) ein festes Element ist, das so gestaltet ist, dass ein Ende (6a) des Aufprall-Kontrollelements (4) umfasst:
- eine erste bezüglich der Innenfläche (3a) relative Position,
- eine zweite, bezüglich der Innenfläche (3a) relative Position nach einem durch einen Aufprall hervorgerufenen Stoß auf die Außenfläche (2a) mit einer Kraft, die über einem vorbestimmten Schwellenwert liegt.

2. Helm nach Anspruch 1, **dadurch gekennzeichnet, dass**
- die Außenfläche (2a) fester Bestandteil der ersten Schale (3) ist,
- die erste Schale (3) von einem elastisch verformbaren Material gebildet wird,
- das an der ersten Schale (3) befestigte Aufprall-Kontrollelement (4) aus einem plastisch verformbaren Material besteht, sodass nach einem Aufprall mit einer Kraft, die über dem vorbestimmten Schwellenwert liegt, die Schale (3) ihre ursprüngliche Form wieder einnimmt, indem sie eine Bewegung des während der Stoßaufnahme komprimierten Kontrollelements (4) nach sich zieht.

3. Helm nach Anspruch 1, **dadurch gekennzeichnet, dass** er eine zweite Schale (2) in Form einer Haube umfasst, wobei die erste Schale (3) innerhalb der zweiten Schale (2) untergebracht und die Außenfläche (2a) durch die zweite Schale (2) begrenzt ist.

4. Helm nach Anspruch 3, **dadurch gekennzeichnet, dass** die erste Schale (3) aus einem plastisch verformbaren Material besteht, sowie dadurch, dass das Aufprall-Kontrollelement (4), das fest mit der ersten Schale (3) verbunden ist, aus einem elastisch verformbaren Material besteht.

5. Helm nach einem der Ansprüche 3 oder 4, **dadurch gekennzeichnet, dass** das Aufprall-Kontrollelement (4) in der ersten Position in der ersten Schale (3) angeordnet ist, sowie dadurch, dass das Aufprall-Kontrollelement (4) in der zweiten Position mindestens einen Bereich (4a) hat, der aus der ersten Schale (3) im Bereich der Innenfläche (3a) heraussteht.

6. Helm nach einem der vorstehenden Ansprüche, **dadurch gekennzeichnet, dass** das Aufprall-Kontrollelement (4) einen Sockel (5) hat, von dem aus ein Schaft (6) ausgeht, wobei das freie, zum Sockel (5) entgegengesetzte Ende (6a) des Schafts (6) in eine zur Außenfläche (2a) entgegengesetzte Richtung ausgerichtet und der Sockel (5) an der ersten Schale (3) befestigt ist.

7. Helm nach Anspruch 6, **dadurch gekennzeichnet, dass** der Sockel (5) einen Hals (5a) aufweist, der an seinem Übergang zum Schaft (6) eine umlaufende Rille (5b) aufweist und so einen Befestigungspunkt des Aufprall-Kontrollelements (4) mit der ersten Schale (3) im Bereich seines Sockels (5) bildet.

8. Helm nach Anspruch 4 und einem der Ansprüche 5 bis 7, **dadurch gekennzeichnet, dass** der Schaft (6) geeignet ist, in der ersten Schale (3) zu gleiten, wenn die genannte erste Schale (3) nach der Aufnahme eines Stoßes im Bereich des Aufprall-Kontrollelements (4) an Dicke verliert.

9. einem der Ansprüche 3 bis 5, **dadurch gekennzeichnet, dass** die erste Schale (3) ein Loch umfasst, in dem das Aufprall-Kontrollelement (4) montiert ist, welches Aufprall-Kontrollelement (4) an der ersten Schale (3) im Bereich eines Endes des Lochs nahe der zweiten Schale (2) befestigt ist, und welches Aufprall-Kontrollelement (4) einen Bereich aufweist, der geeignet ist, beim Übergang aus der ersten in die zweite Position in dem Loch zu gleiten, sodass es in der zweiten Position aus einer Öffnung des Lochs herausragt (4a), die sich im Bereich der Innenfläche (3a) befindet.

10. Helm nach Anspruch 2, **dadurch gekennzeichnet, dass** die erste Schale (3) ein Loch umfasst, in dem das Aufprall-Kontrollelement (4) montiert ist, welches Aufprall-Kontrollelement (4) an der ersten Schale (3) im Bereich eines der Außenfläche (2a) nahegelegenen Ende des Lochs befestigt ist, und welches Aufprall-Kontrollelement (4) einen Bereich aufweist, der geeignet ist, beim Übergang aus der ersten in die zweite Position durch Kompression in dem Loch in Richtung auf die Außenfläche (2a) zu gleiten.

11. Helm nach Anspruch 3, **dadurch gekennzeichnet, dass** das Aufprall-Kontrollelement aus einem plastisch verformbaren Material besteht und an der zweiten Schale (2) befestigt ist.

12. Helm nach Anspruch 11, **dadurch gekennzeichnet, dass** das Aufprall-Kontrollelement (4) ein Teil der ersten Schale (3) ist, welche erste Schale (3) an der zweiten Schale (2) im Bereich des genannten Aufprall-Kontrollelements (4) befestigt ist, das Aufprall-Kontrollelement (4) in der ersten Position fest verbunden ist mit der ersten Schale (3) und das Aufprall-Kontrollelement (4) in der zweiten Position von der übrigen Schale (3) gelöst ist.

13. Helm nach einem der vorstehenden Ansprüche, **dadurch gekennzeichnet, dass** er mehrere Aufprall-Kontrollelemente umfasst, die so angeordnet sind, dass sie mehrere mögliche Aufprallbereiche an der Außenfläche (2a) abdecken.

## Claims

1. A safety helmet comprising:
- a first shell (3) designed to absorb shocks caused by impacts on an outer surface (2a) of said helmet,
- an inner surface (3a) at least partially delineated by the first shell (3) and designed to be oriented towards the helmet wearer's head,
- an Impact Indicator (4),
**characterized in that** the impact indicator (4) is a solid element configured so that one end (6a) of the impact indicator (4) comprises:
- a first relative position with respect to the inner surface (3a),
- a second relative position with respect to the inner surface (3a) after a shock caused by an impact of greater force than a predefined threshold on the outer surface (2a).

2. The helmet according to claim 1, **characterized in that**:
- the outer surface (2a) forms an integral part of the first shell (3),
- the first shell (3) is formed from a plastic deformation material,
- the impact indicator (4), fixed to the first shell (3), is formed from plastic deformation material so that after the impact of greater force than the predefined threshold, the first shell (3) resumes its initial shape causing movement of the indicator (4) compressed during absorption of the shock.

3. The helmet according to claim 1, **characterized in that** it comprises a second shell (2) in the form of a crown, the first shell (3) being housed inside the second shell (2), the outer surface (2a) being delineated by the second shell (2).

4. The helmet according to claim 3, **characterized in that** the first shell (3) is made from a plastic deformation material, and **in that** the impact indicator (4), securedly attached to the first shell (3), is made from a plastic deformation material.

5. The helmet according to one of claims 3 or 4, **characterized in that** the impact indicator (4) is housed in the first shell (3) in the first position, and **in that** in the second position the impact indicator (4) comprises at least one portion (4a) salient from the first shell (3) at the level of the inner surface (3a).

6. The helmet according to any one of the foregoing claims, **characterized in that** the impact indicator (4) comprises a base (5) from which a rod (6) extends in the upwards direction, the free end (6a) of the rod (6) opposite the base (5) being directed in an opposite direction to the outer surface (2a), and the base (5) being secured to the first shell (3).

7. The helmet according to claim 6, **characterized in that** the base (5) comprises a rim (5a) delineating an annular groove (5b) at its interface with the rod (6), thereby forming a fixing point of the impact indicator (4) with the first shell (3) at the level of its base (5).

8. The helmet according to claim 4 and one of claims 5 to 7, **characterized in that** the rod (6) is able to slide in the first shell (3) when said first shell (3) decreases in thickness consecutively to absorption of a shock at the level of said impact indicator (4).

9. The helmet according to one of claims 3 to 5, **characterized in that** the first shell (3) comprises a hole in which the impact indicator (4) is fitted, said impact indicator (4) being fixed to the first shell (3) at the level of one end of the proximal hole of the second shell (2), and said impact indicator (4) comprising a portion able to slide in the hole, when movement takes place from the first position to the second position, so as to be salient (4a), in the second position, from an opening of the hole situated at the level of the inner surface (3a).

10. The helmet according to claim 2, **characterized in that** the first shell (3) comprises a hole in which the impact indicator (4) is fitted, said impact indicator (4) being fixed to the first shell (3) at the level of one end of the proximal hole of the outer surface a), and said impact indicator (4) comprising a portion able to slide by compression in the hole in the direction of the outer surface (2a) when movement takes place from the first position to the second position.

11. The helmet according to claim 3, **characterized in that** the impact indicator is formed from a plastic deformation material and is fixed to the second shell (2).

12. The helmet according to claim 11, **characterized in that** the impact indicator (4) is a part of the first shell (3), said first shell (3) being fixed to the second shell (2) at the level of said impact indicator (4), in the first position the impact indicator (4) is monoblock with the first shell (3) and in the second position the impact indicator (4) is detached from the rest of the first shell (3).

13. The helmet according to any one of the foregoing claims, **characterized in that** it comprises a plurality of impact indicators arranged to cover several potential impact areas on the outer surface (2a).
